# EUROPÄISCHE PATENTSCHRIFT

(11) **EP 0 669 488 B1**
(45) Veröffentlichungstag und Bekanntmachung des Hinweises auf die Patenterteilung: **11.11.1998**
(21) Anmeldenummer: 95101739.1
(22) Anmeldetag: 09.02.1995
(51) Int. Cl.: F16K 35/02

(54) **Antriebseinheit**
Actuation device
Dispositif de commande

(30) Priorität: 25.02.1994 DE 4406207
(43) Veröffentlichungstag der Anmeldung: 30.08.1995
(73) Patentinhaber: Friatec Aktiengesellschaft, 68229 Mannheim (DE)
(72) Erfinder: Büch, Wolfgang, Dipl.-Ing. (FH), D-66386 St. Ingbert (DE)
(74) Vertreter: Klose, Hans, Dipl.-Phys.

(56) Entgegenhaltungen:
- DE-A- 1 809 561
- DE-B- 2 011 011
- FR-A- 784 637
- FR-A- 1 330 903
- 3R INTERNATIONAL, Bd.31, Nr.7, Juli 1992, ESSEN DE Seiten 403 - 409, XP000195168 GÖTZ 'Fallgewichtsantriebe an Armaturen für Rohrbruchsicherungen und zwangsgesteuerten Pumpenrücklaufsicherungen'

## Beschreibung

Die Erfindung bezieht sich auf eine Antriebseinheit einer Armatur, insbesondere einer Absperrklappe, gemäß den im Oberbegriff des Patentanspruchs 1 angegebenen Merkmalen.

Eine derartige Antriebseinheit ist in der Druckschrift "3R International, 31 (1992), Heft 7, Juli, Seiten 403 bis 409" beschrieben. Diese Antriebseinheit enthält einen Hydraulikzylinder, dessen Kolbenstange über einen Hebel mit dem zu bewegenden Organ der Armatur, und zwar insbesondere einer Absperrklappe, gekoppelt ist. Es ist ferner ein Fallgewichtsantrieb vorhanden, mit welchem ein definiertes statisches Moment auf die Antriebswelle der Armatur ausübbar ist. Während des normalen Betriebs ist die Absperrklappe geöffnet und das Fallgewicht angehoben und hydraulisch arretiert. Diese hydraulische Arretierung hat systembedingt eine innere Leckage, mit der Folge, daß die Offenstellung der Armatur unerwünscht verlassen wird und das angehobene Fallgewicht absinkt.

Durch eine geeignete hydraulische und elektrische Schaltung wird nach Meldung eines bestimmten Absenkbereiches die Antriebseinheit derart angesteuert, daß die Offenstellung der Armatur wieder angefahren wird. Dieser Vorgang wiederholt sich in Abhängigkeit von der Hydraulikleckage. Im Störfall, beispielsweise bei einem Leck im Leitungssystem, wird das angehobene Fallgewicht infolge eines entsprechenden Signals freigegeben und die Absperrklappe wird geschlossen. Es gelangen Ventilsteuerungen zum Einsatz, welche einen nicht unerheblichen Fertigungs- und Montageaufwand sowie besondere Maßnahmen zur Überprüfung und Wartung erfordern, damit im Störfalle auch tatsächlich die geforderte Sicherheitsfunktion erfüllt und die Absperrklappe geschlossen werden kann.

Aus der DE-A 18 09 561 ist ein elektrisch gesteuertes Ventil bekannt, welches von Hand betätigbar ist. Die Betätigung des Ventils erfolgt in Abhängigkeit eines bestimmten elektrischen Signals, welches zuvor auf eine Magnetspule gegeben wurde und ein Anker in eine vorgegebene Position bringt. Die manuelle Betätigung des Ventils wird über einen ringförmigen als Handgriff ausgebildeten Teil eingeleitet. In der geschlossenen Position des Ventils kann dieser Handgriff axial bewegt werden, ohne hierbei über eine Hülse und eine Kugel-Rastmechanik gleichzeitig einen Träger der Ventilscheibe zu bewegen. Die Hülse umgibt den genannten Träger, welcher zur Aufnahme einer Verriegelungsfeder topfartig ausgebildet ist und ein keilartig gestaltetes Bauteil enthält. Es ist ferner eine Entriegelungsfeder vorhanden, welche auf den Anker sowie das keilartige Bauteil entgegen der Kraft der Verriegelungsfeder einwirkt. Mittels des Ankers erfolgt nicht die Betätigung der Ventilscheibe als solches, sondern lediglich eine Voreinstellung derart, daß das Ventil manuell nur dann betätigt werden kann, wenn ein elektrisches Signal zuvor auf den Anker eingewirkt hat. Der genannte Träger zur Aufnahme der Verriegelungsfeder sowie des topfartigen Bauteils einerseits und der genannte Anker andererseits sind separate Bauteile und können nicht ohne weiteres durch eine durchgehende, einteilige Stange ersetzt werden, welche zwischen einer Betätigungseinrichtung und einer Armatur vorhanden ist.

Hiervon ausgehend liegt der Erfindung die Aufgabe zugrunde, die Antriebseinheit dahingehend weiterzubilden, daß mit geringem konstruktiven Aufwand eine hohe Funktionssicherheit für die Antriebseinheit erreicht wird. Die Antriebseinheit soll eine kompakte Bauweise aufweisen und vor äußeren Einwirkungen zuverlässig geschützt sein.

Die Lösung dieser Aufgabe erfolgt bei der Antriebseinheit der genannten Art gemäß den kennzeichnenden Merkmalen des Patentanspruchs 1.

Die erfindungsgemäße Antriebseinheit ermöglicht mit hoher Funktionssicherheit eine automatische, mechanische Verriegelung der Betätigungsstange, um das Absperrorgan in der vorgegebenen Position, insbesondere in seiner Offenstellung, zu verriegeln. Als Antriebseinheit gelangt vor allem eine Kolben-Zylinderanordnung zum Einsatz, bei welcher die Kolbenstange gleichzeitig die genannte Betätigungsstange ist. Auf der axial bewegbaren Betätigungsstange ist vorzugsweise in einer ersten Hülse eine erste Ausnehmung oder Kammer für wenigstens ein Sperrelement vorgesehen. Im Gehäuse ist ferner eine äußere zweite Hülse mit einer Bypass-Kammer für das Sperrelement vorgesehen. Entsprechend der Stellung der genannten Hülsen greift das Sperrelement entweder in die erste Ausnehmung ein und arretiert so die Betätigungsstange oder das Sperrelement ist teilweise in der Bypass-Kammer und gibt die erste Hülse und somit die Betätigungsstange zur Bewegung frei. Die derart ausgebildete Verriegelungseinheit ist in zweckmäßiger Weise unmittelbar an die Antriebseinheit integriert, und ist insbesondere an dem Kopfende eines Antriebszylinders angeordnet und mit dem Ölraum des Zylinders verbunden. Da die Verriegelungseinheit am Zylinderraum angeordnet ist, sind alle Funktionsteile im Ölbad eingesetzt und in besonders zweckmäßiger Weise nach außen vollständig gekapselt. Im Falle einer Überflutung der Antriebseinheit wird somit die Funktionssicherheit der Verriegelungseinheit in keiner Weise beeinträchtigt. Erfindungsgemäß ist eine kompakte Baueinheit in geschlossener Ausführung geschaffen, welche überflutungssicher ist und für eine lange Lebensdauer eine hohe Funktionssicherheit gewährleistet. Die erfindungsgemäße Antriebs- und Verriegelungseinheit erfordert kein Nachstellen oder Aufladen, um die Sicherheitsfunktion immer zu gewährleisten. Die Auslösung der Verriegelungseinheit erfolgt in Abhängigkeit eines Stör-Meldesignales, wobei die Sperrelemente freigegeben und die Kolben- bzw. Betätigungsstange insbesondere mittels des Fallgewichtsantriebes betätigt wird, um die Absperrklappe zu schließen.

Weiterbildungen und besondere Ausgestaltungen der Erfindung sind in den Unteransprüchen sowie der nachfolgenden Beschreibung angegeben.

Die Erfindung wird nachfolgend anhand der in der Zeichnung dargestellten Ausführungsbeispiele näher erläutert. Es zeigen:
- Fig. 1: einen axialen Längsschnitt durch einen Teil der Antriebseinheit mit der integrierten Verriegelungseinheit beim Anfahren der Verriegelung,
- Fig. 2: einen Schnitt durch eine weitere Ausgestaltung der Erfindung mit einer einteilig ausgebildeten inneren Hülse,
- Fig. 3: die Antriebseinheit gemäß Fig. 2, jedoch in der Verriegelungsposition,
- Fig. 4: die Antriebseinheit gemäß Fig. 2, jedoch nach erfolgter Freigabe.

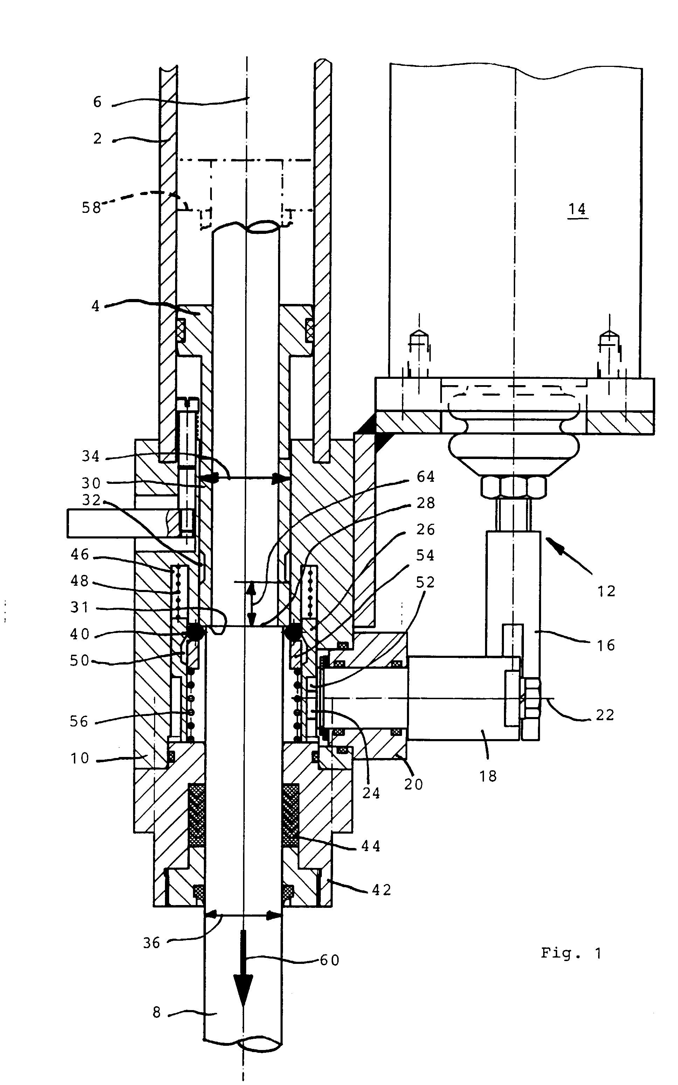

Fig. 1 zeigt einen Teil einer Antriebseinheit mit einem Zylinder 2 und einem Kolben 4. Der Kolben 4 ist durch Beaufschlagung mit Druckmittel in bekannter Weise in Richtung der Längsachse 6 axial im Zylinder 2 verschiebbar. Mit dem Kolben 4 ist eine Betätigungs- bzw. Kolbenstange 8 gekoppelt, welche ebenso wie der Kolben 4 axial bewegbar ist. Am freien Ende, also gemäß Fig. 1, am unteren hier nicht dargestellten Ende, ist die Kolbenstange 8 über einen Hebel mit der Antriebswelle eines Absperrorgans, und zwar insbesondere einer Absperrklappe gekoppelt.

Am Ende des Zylinders 2 ist ein Gehäuse 10 einer Verriegelungseinheit angeordnet, welche von der Kolbenstange 8 durchdrungen wird. Es ist ferner eine Auslöseeinheit 12 vorhanden, welche einen Hubmagneten 14 aufweist, welcher über einen Hebel 16 an einen drehbaren Exzenterbolzen 18 gekoppelt ist. Der Exzenterbolzen 18 ist in einem Lagerbock 20 um eine Achse 22 drehbar und enthält einen inneren Zapfen 24, welcher exzentrisch zur Drehachse 22 angeordnet ist. Wie nachfolgend noch zu erläutern ist, dient die Auslöseeinheit zur Verschiebung einer äußeren Hülse 26 der Verriegelungseinheit. Die dargestellte Auslöseeinheit zeichnet sich zwar durch eine kompakte und einfache Bauweise aus, doch kann im Rahmen der Erfindung auch eine andere Auslöseeinheit vorgesehen werden, mittels welcher eine axiale Verschiebung der äußeren Hülse 26 der Verriegelungseinheit ermöglicht werden kann.

Die Stange 8 besitzt eine Ringschulter 28, auf welcher eine die Stange 8 umgebende erste Hülse 30 abgestützt ist. Die Hülse 30 ist zwischen den Kolben 4 und der Ringschulter 28 in der dargestellten Weise eingespannt. Die Hülse 30 weist an ihrer Außenfläche eine insbesondere ringförmige Ausnehmung oder eine Kammer 32 auf, welche zweckmäßig als eine Ringnut ausgebildet ist. Die erste Hülse 30 liegt mit einer Endkante 31 an der Ringschulter 28 der Stange an. Die Hülse 30 besitzt einen Außendurchmesser 34, welcher um einen vorgegebenen Betrag größer ist als der Außendurchmesser 36 der Kolbenstange 8 in dem an die Ringschulter 28 anschließenden und vom Kolben 4 abgewandten Teil.

In einer alternativen Ausgestaltung kann die Kammer 32 statt in einer separaten mit der Stange 8 verbundenen Hülse unmittelbar in die Außenfläche der Stange eingebracht sein. Bei dieser Ausgestaltung ist die Stange 8 mit der Hülse quasi einteilig ausgebildet, wobei die Endkante 31 eine Ringschulter der Stange 8 bildet, wobei einerseits die Stange 8 den Außendurchmesser 36 und andererseits den vergrößerten Außendurchmesser 34 aufweist.

Der ersten Kammer 32 sind ferner Sperrelemente 40 zugeordnet, welche bei der hier dargestellten Ausführungsform als Kugeln ausgebildet sind. Die Sperrelemente 40 können im Rahmen der Erfindung auch als Bolzen, Wälzkörper, Nocken oder dergleichen ausgebildet sein. Entscheidend ist, daß die erste Kammer 32, insbesondere der Hülse 30, mit dem oder den Sperrelementen 40 in Eingriff bringbar ist. Das Gehäuse 10 ist auf der dem Zylinder 2 abgewandten Seite mit einem Gehäusekopf 42 verschlossen, welcher von der Kolbenstange 8 durchdrungen ist und Dichtungselemente 44 für die Kolbenstange 8 enthält und deren Führung ermöglicht. Eine besondere Führung und/ oder Abdichtung zwischen dem Zylinder 2 und der Verriegelungseinheit ist nicht vorhanden, so daß das Öl und/oder Schmiermittel aus dem Bereich des Zylinders 2 auch zur Versorgung der Verriegelungseinheit dient, welche nach außen dicht und insbesondere überflutungssicher ausgelegt ist. In dem Gehäuse 10 ist die bereits erwähnte äußere Hülse 26 axial verschiebbar gelagert. Das Gehäuse 10 weist für die äußere Hülse 26 einen Einstich 46 mit einem Federelement 48 auf, welches die Hülse 26 in Richtung zum Gehäusekopf 12 vorspannt. Die äußere Hülse 26 enthält eine radial innenliegende Bypass-Kammer 50 für das oder die Sperrelemente 40. Die Bypass-Kammer 50 ist zweckmäßig als Ringkammer ausgebildet. Der Zapfen 24 des Exzenterbolzens 18 greift in eine an der Außenseite der äußeren Hülse 26 vorgesehene Ausnehmung 52 ein.

Schließlich ist eine innere Hülse 54 innerhalb der äußeren Hülse 26 angeordnet. Der Innendurchmesser der inneren Hülse 54 ist zumindest gleich oder geringfügig größer als der Außendurchmesser 34 der auf der Kolbenstange 8 festgelegten Hülse 30. Die innere Hülse 54 wird von einer Feder 56 beaufschlagt, welche einerseits auf dem Gehäusekopf 42 abgestützt ist und andererseits an der axialen Endfläche der inneren Hülse 54 angreift. In der dargestellten Position sind die Sperrelemente 40 zwischen der inneren Hülse 54 und einer axialen Endfläche im Inneren des Gehäuses 10 angeordnet.

In Fig. 1 ist mit strichpunktierten Linien 58 die Ausgangsposition des Kolbens 4 angedeutet, wobei entsprechend nach oben verschoben auch die Hülse 30 sowie die Kolbenstange 8 mit der Ringschulter 28 liegen. In dieser Position ist die eingangs erwähnte Absperrklappe geschlossen. Durch Beaufschlagung des Antriebszylinders 2 mit Druckmittel wird der Kolben 4 in Richtung des Pfeiles 60 bewegt, bis die nach außen vorstehende Endkante 31 der ersten Hülse 30 in der dargestellten Weise mit den Sperrelementen 40 in Eingriff gelangt. In dieser Position beginnt das Anfahren der Verriegelung. Bei einer weiteren Bewegung der Kolbenstange 8 in Richtung des Pfeiles 60 werden die Sperrelemente 40 sowie die zweite innere Hülse 54 entgegen der Kraft der Feder 56 in der gleichen Richtung weiterbewegt. Diese Bewegung erfolgt so lange, bis die Sperrelemente 40 in den Bereich der Bypass-Kammer 50 der äußeren Hülse 26 gelangen und bei weiterer Bewegung der Kolbenstange in diese Bypass-Kammer 50 vollständig radial nach außen ausweichen. Die Kolbenstange 8 kann danach noch weiter in Richtung des Pfeiles 60 bewegt werden, und zwar um die axiale Wegstrecke 64, welche dem Abstand zwischen der Ringschulter 28 und dem unteren Ende der Kammer 32 entspricht.

Nunmehr können die Sperrelemente 40 wieder radial nach innen in die Kammer 32 bewegt werden, wobei eine Rückwärtsbewegung der Kolbenstange 8 entgegen der Richtung des Pfeiles 60 erfolgen kann. Diese Rückwärtsbewegung ist jedoch nur sehr kurz, bis nämlich die Sperrelemente 40 wieder an der inneren axialen Stirnfläche des Gehäuses anliegen. In dieser Verriegelungsposition nehmen die Sperrelemente 40 sowie die innere Hülse 54 die in Fig. 1 dargestellte Position ein, wobei aber die Sperrelemente 40 in die auf der gleichen axialen Position befindliche Kammer 32 der ersten Hülse 30 eingreifen. Eine weitere Rückwärtsbewegung entgegen der Richtung des Pfeiles 60 ist damit blockiert. Zur Freigabe der Kolbenstange wird mittels der Auslöseeinheit 12 der Exzenterbolzen 18 um ca. 180° um die Drehachse 22 gedreht, so daß der exzentrisch angeordnete Zapfen 24 die äußere Hülse 26 gegen die Kraft des Federelements 48 vom Gehäusekopf 42 wegbewegt. Ersichtlich können die Sperrelemente 40 danach radial nach außen in die Bypass-Kammer 50 ausweichen, wodurch die Bewegung der ersten Hülse 30 sowie der Kolbenstange 8 entgegen der Richtung des Pfeiles 60 freigegeben ist.

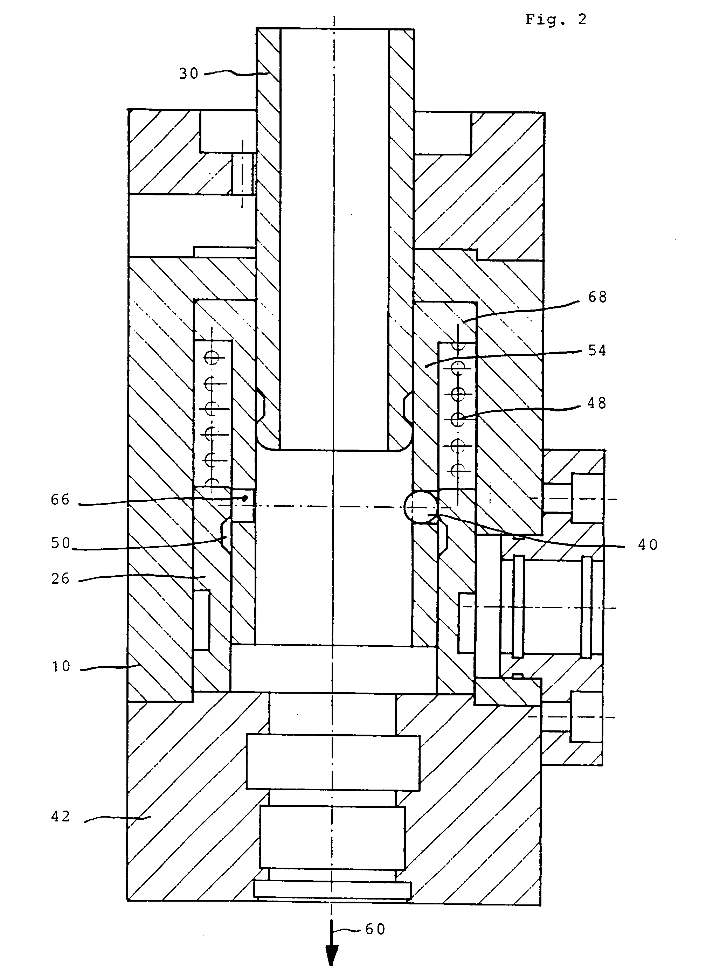

Fig. 2 zeigt eine besondere modifizierte Ausgestaltung, gemäß welcher die innere Hülse 54 radiale Ausnehmungen 66 bzw. Bohrungen zur Aufnahme der als Kugeln ausgebildeten Sperrelemente 40 enthält. Die innere Hülse 54 ist in Richtung zum hier nicht weiter dargestellten Kolben verlängert ausgebildet und besitzt oben einen radial nach außen gerichteten Ansatz 68, an welchem das Federelement 48 anliegt. Die mit der Kolbenstange gekoppelte erste Hülse 30 ist mit den Sperrelementen 40 noch nicht in Eingriff und kann mit der hier nicht dargestellten Kolbenstange noch in Richtung des Pfeiles 60 axial bewegt werden. Bei dieser Ausgestaltung ist nur ein einziges Federelement 48 vorhanden, mit welchem sowohl die innere Hülse 54 als auch die äußere Hülse 26 gegensinnig axial beaufschlagt werden.

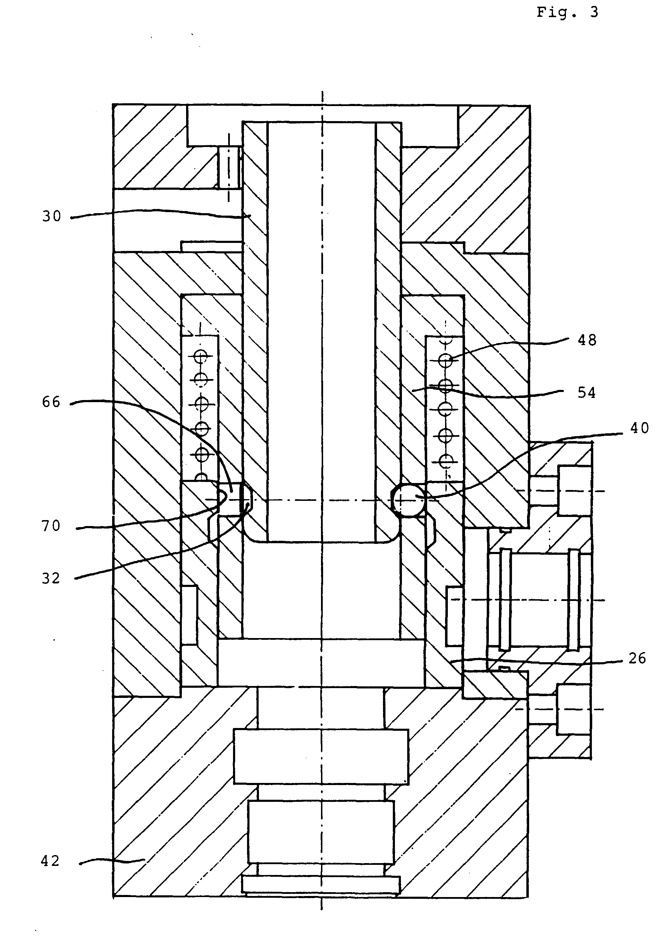

In Fig. 3 ist die Sperrposition für die erste Hülse 30 und die mit dieser gekoppelte Kolbenstange dargestellt. Die Kammer 32 liegt in der gleichen Radialebene wie die Sperrelemente 40 sowie die radialen Ausnehmungen 66 der inneren Hülse 54. Ein radiales Ausweichen der Sperrelemente 40 ist durch die innere Anlagefläche 70 der äußeren Hülse 26 unterbunden. Aufgrund des Federelements 48 wird die innere Hülse 54 in die dargestellte Position bzw. zur Anlage an den Gehäusekopf 10 gebracht.

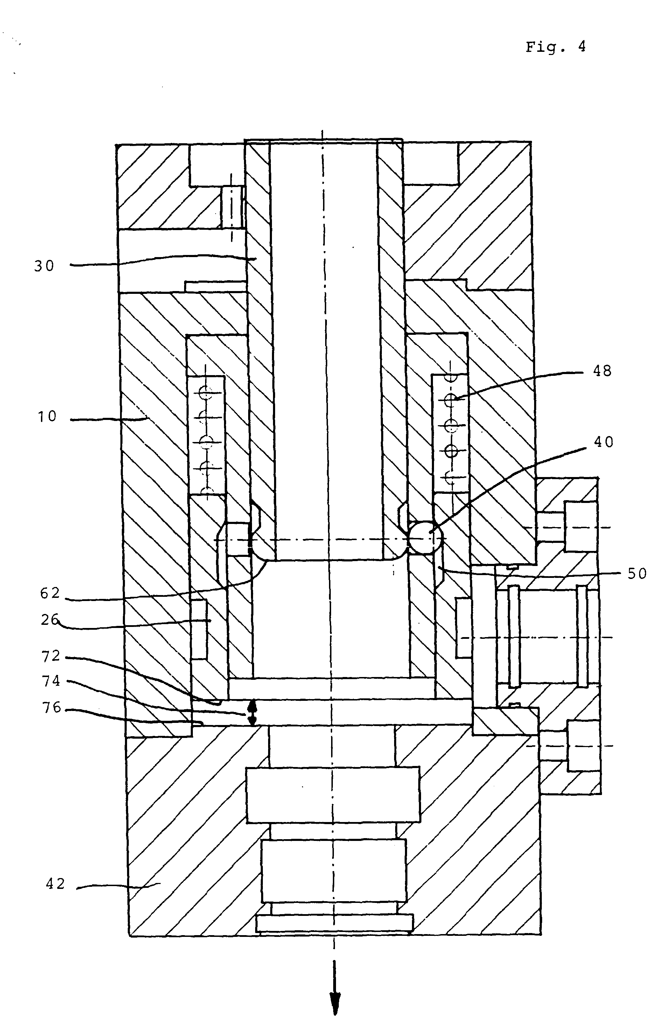

Fig. 4 zeigt schließlich die Freigabe der ersten Hülse 30 entgegen der Pfeilrichtung 60. Mittels der Auslöseeinheit ist nunmehr die äußere Hülse 26 in Richtung nach oben bzw. in Richtung zu dem Zylinder derart bewegt, daß die Sperrelemente 40 radial nach außen in die Bypass-Kammer 50 ausweichen konnten. Die untere Stirnkante 72 der äußeren Hülse 26 weist hierbei einen vorgegebenen Abstand 74 zur inneren Endfläche 76 des Gehäusekopfes 10 auf. Die Bewegung der Kolbenstange ist damit freigegeben, wobei auch die erste Hülse 30 noch weiter entgegen der Pfeilrichtung 60 nach oben bewegt wird. Hat die Ringschulter der Kolbenstange die Sperrelemente 40 passiert, so können letztere wieder radial nach innen bewegt werden und in der Folge wird mittels des Federelements 48 die äußere Hülse 26 in Pfeilrichtung 60 nach unten bewegt werden können.

### Bezugszeichen

- 2: Zylinder
- 4: Kolben
- 6: Längsachse
- 8: Kolben-Betätigungsstange
- 10: Gehäuse der Verriegelungseinheit
- 12: Auslöseeinheit
- 16: Hebel
- 18: Exzenterbolzen
- 20: Lagerbock
- 22: Drehachse von 18
- 24: exzentrischer Zapfen
- 26: äußere Hülse
- 28: Ringschulter
- 30: erste Hülse
- 31: Endkante von 30
- 32: Kammer / Ringnut
- 34: Außendurchmesser von 30
- 36: Außendurchmesser von 8
- 40: Sperrelement
- 42: Gehäusekopf
- 44: Dichtungselement
- 46: Einstich
- 48: Federelement
- 50: Bypass-Kammer
- 52: Ausnehmung in 26
- 54: Innere Hülse
- 56: Federelement
- 58: strichpunktierte Linie
- 60: Pfeil
- 64: axialer Abstand zwischen 32 und 62
- 66: radiale Ausnehmung in 54
- 68: Ansatz an 54
- 70: innere Anlagefläche von 26
- 72: untere Stirnkante von 26
- 74: Abstand zwischen 72 und 76
- 76: innere Endfläche von 10

## Patentansprüche

1. Antriebseinheit einer Armatur, insbesondere einer Absperrklappe, enthaltend eine in einem Gehäuse (10) axial bewegbare Betätigungsstange (8), welche an einem Ende mit einem Absperrorgan der Armatur und am anderen Ende mit einer Betätigungseinrichtung gekoppelt ist, ferner enthaltend eine Auslöseeinheit (12) und eine Verriegelungseinheit, mittels welcher das Absperrorgan und die Betätigungsstange (8) in einer vorgegebenen Position arretierbar sind und bedarfsweise aus dieser Position freigebbar sind, wobei in der vorgegebenen Position auf das Absperrorgan ein statisches Moment wirksam ist, durch welches nach Freigabe der Verriegelungseinheit das Absperrorgan betätigbar ist,
dadurch gekennzeichnet, daß der Stange (8) am Außenumfang eine erste Kammer (32) zugeordnet ist, welche vorzugsweise in einer ersten mit der Stange (8) gekoppelten Hülse (30) angeordnet ist,
daß wenigstens ein Sperrelement (40) der Verriegelungseinheit mit der ersten Kammer (32) in Eingriff bringbar ist,
daß eine innere Hülse (54) vorgesehen ist, welche dem wenigstens einen Sperrelement (40) zugeordnet ist und welche von der Stange (8) durchdrungen ist, wobei die erste Kammer (32) zumindest teilweise in die innere Hülse (54) einschiebbar ist,
und daß eine mittels der Auslöseeinheit (12) bewegbare äußere Hülse (26) mit einer Bypass-Kammer (50) vorgesehen ist, wobei diese Hülse (26) - bei entsprechender axialer Position der Betätigungsstange (8) - wahlweise in eine erste Position bewegbar ist, in welcher das wenigstens eine Sperrelement (40) in die erste Kammer (32) eingreift,oder in eine zweite Position, in welcher das wenigstens eine Sperrelement (40) in die Bypass-Kammer (50) eingreift.

2. Antriebseinheit nach Anspruch 1, dadurch gekennzeichnet, daß beim Bewegen der Stange (8) in die vorgegebene Position das Sperrelement (40) und die innere Hülse (54) axial mit bewegt werden, wobei das Sperrelement (40) zumindest zeitweise in die Bypass-Kammer (50) der äußeren Hülse (26) bewegbar ist.

3. Antriebseinheit nach Anspruch 1 oder 2, dadurch gekennzeichnet, daß die innere Hülse (54) von der die Bypass-Kammer (50) enthaltenden äußeren Hülse (26) teilweise umgeben und/oder zumindest teilweise in oder aus dieser bewegbar ist, und/oder daß das Sperrelement (40) wahlweise zur Arretierung zumindest teilweise in die erste Kammer (32) oder zur Freigabe der Stange (8) nach insbesondere axialer Verschiebung der äußeren Hülse (26) mittels der Auslöseeinheit (12) zumindest teilweise in die Bypass-Kammer (50) der äußeren Hülse (26) eingreift.

4. Antriebseinheit nach einem der Ansprüche 1 bis 3, dadurch gekennzeichnet, daß die äußere Hülse (26) mittels eines Federelements (48) beaufschlagt ist und mittels der Auslöseeinheit (12) axial derart bewegbar ist, daß das oder die Sperrelemente (40) in die Bypass-Kammer (50) gelangen und die Stange (8) zur axialen Bewegung freigeben.

5. Antriebseinheit nach einem der Ansprüche 1 oder 4, dadurch gekennzeichnet, daß der Stange (8) eine Ringschulter oder Endkante (31) zugeordnet ist, wobei vorzugsweise die erste Hülse (30) auf einer Ringschulter (28) der Stange (8) axial abgestützt ist, und daß der von der ersten Kammer (32) abgewandte Teil der Stange (8) einen Durchmesser (36) aufweist, welcher kleiner ist als der Außendurchmesser (34) der ersten Hülse (30) oder der Stange (8) im Bereich der ersten Kammer (32).

6. Antriebseinheit nach einem der Ansprüche 1 bis 5, dadurch gekennzeichnet, daß zur axialen Führung und/oder Festlegung des wenigstens einen Sperrelements (40) die innere Hülse (54) vorgesehen ist und/oder daß die innere Hülse (54) radial zwischen der ersten Hülse (30) und der äußeren Hülse (26) angeordnet ist und/oder in Richtung der Längsachse (6) bewegbar ist.

7. Antriebseinheit nach einem der Ansprüche 1 bis 6, dadurch gekennzeichnet, daß die äußere Hülse (26), insbesondere an ihrer Außenfläche eine Ausnehmung (52) aufweist, in welche ein Zapfen (24) der Auslöseeinheit (12) eingreift.

8. Antriebseinheit nach einem der Ansprüche 1 bis 7, dadurch gekennzeichnet, daß die Verriegelungseinheit direkt im Anschluß an die Betätigungseinrichtung angeordnet ist und von der Betätigungsstange (8) durchdrungen ist, wobei das Gehäuse (10) der Verriegelungseinheit an dem anderen Ende zur Führung und/oder Abdichtung einen Kopf (42) sowie wenigstens ein Dichtungselement (44) enthält.

9. Antriebseinheit nach einem der Ansprüche 1 bis 8, dadurch gekennzeichnet, daß im Gehäuse (10) ein Lagerbock (20) eines Exzenterbolzens (18) der Auslöseeinheit (12) angeordnet ist.

## Claims

1. Actuator for a fitting, in particular a shut-off valve, comprising an actuating rod (8) which is axially movable in a housing (10) and is coupled at one end to a shut-off device of the fitting and at the other end to an actuating means, and further comprising a release unit (12) and a locking unit by means of which the shut-off device and the actuating rod (8j can be locked in a predetermined position and, if necessary, can be released from this position, a static torque acting on the shut-off device in the predetermined position, by means of which the shut-off device can be actuated after the release of the locking unit, characterised in that a first chamber (32) is associated with the rod (8) on the outer circumference and is preferably arranged in a first sleeve (30) coupled to the rod (8), that at least one stop element (40) of the locking unit can be brought into engagement with the first chamber (32), that an inner sleeve (54) is provided, associated with the at least one stop element (40) and traversed by the rod (8), wherein the first chamber (32) can be inserted at least partially into the inner sleeve (54), and that an outer sleeve (26) which can be moved by means of the release unit (12) is provided with a bypass chamber (50), wherein this sleeve (26), in the corresponding axial position of the actuating rod (8), can be moved selectively into a first position in which the at least one stop element (40) engages in the first chamber (32) or into a second position in which the at least one stop element (40) engages in the bypass chamber (50).

2. Actuator according to claim 1, characterised in that, when the rod (8) moves into the predetermined position, the stop element (40) and the inner sleeve (54) are moved axially therewith, wherein the stop element (40) can be moved at least temporarily into the bypass chamber (50) of the outer sleeve (26).

3. Actuator according to claim 1 or claim 2, characterised in that the inner sleeve (54) is partially surrounded by the outer sleeve (26) containing the bypass chamber (50) and/or can be moved at least partially into or out of the latter, and/or that the stop element (40) engages selectively at least partially in the first chamber (32) for locking or at least partially in the bypass chamber (50) of the outer sleeve (26) for the release of the rod (8) after, in particular, axial displacement of the outer sleeve (26) by means of the release unit (12).

4. Actuator according to one of claims 1 to 3, characterised in that a spring element (48) acts on the outer sleeve (26) which can be moved axially by means of the release unit (12) in such a manner that the stop element or elements (40) enter/s the bypass chamber (50) and release/s the rod (8) for the axial movement.

5. Actuator according to one of claims 1 or 4, characterised in that an annular shoulder or end edge (31) is associated with the rod (8), the first sleeve (30) preferably being axially supported on an annular shoulder (28) of the rod (8), and that the part of the rod (8) remote from the first chamber (32) has a smaller diameter (36) than the outer diameter (34) of the first sleeve (30) or the rod (8) in the region of the first chamber (32).

6. Actuator according to one of claims 1 to 5, characterised in that the inner sleeve (54) is provided for the axial guiding and/or securing of the at least one stop element (40) and/or that the inner sleeve (54) is arranged radially between the first sleeve (30) and the outer sleeve (26) and/or call be moved in the direction of the longitudinal axis (6).

7. Actuator according to one of claims 1 to 6, characterised in that the outer sleeve (26) is provided in particular on its outer surface with a recess (52) engaged by a pin (24) of the release unit (12).

8. Actuator according to one of claims 1 to 7, characterised in that the locking unit is arranged immediately after the actuating means and is traversed by the actuating rod (8), the housing (10) ofthe locking unit being provided at the other end with a head (42) and at least one sealing element (44) for guiding and/or sealing.

9. Actuator according to one of claims 1 to 8, characterised in that a bearing block (20) of an eccentric bolt (18) of the release unit (12) is arranged in the housing (10).

## Revendications

1. Unité d'entraînement d'un élément de robinetterie, en particulier d'un robinet de fermeture, comprenant une tige de manoeuvre (8) mobile axialement dans un boîtier (10), tige qui est couplée à une extrémité à un organe de fermeture de l'élément de robinetterie et à l'autre extrémité à un dispositif de manoeuvre, comprenant de plus une unité de déclenchement (12) et un unité de verrouillage, au moyen de laquelle l'organe de fermeture et la tige de manoeuvre (8) peuvent être immobilisés dans une position prédéterminée et, si nécessaire, peuvent être libérés de cette position, un moment statique agissant sur l'organe de fermeture dans la position prédéterminée, moment par lequel l'organe de fermeture peut être manoeuvré après libération de l'unité de verrouillage, ***caractérisée en ce qu'***à la tige (8) est associée sur la périphérie extérieure une première chambre (32) qui est placée de préférence dans une première douille (30) couplée à la tige (8), ***en ce qu'***au moins un élément de blocage (40) de l'unité de verrouillage peut être mis en prise avec la première chambre (32), ***en ce qu***'une douille intérieure (54) est prévue, qui est associée à l'élément de blocage (40) au nombre d'au moins un et qui est traversée par la tige (8), la première chambre (32) pouvant être enfoncée au moins partiellement dans la douille intérieure (54), et ***en ce qu***'une douille extérieure (26) mobile au moyen de l'unité de déclenchement (12) est munie d'une chambre de dérivation (50), cette douille (26) pouvant - pour une position axiale correspondante de la tige de manoeuvre (8) - être amenée au choix dans une première position dans laquelle l'élément de blocage (40) au nombre d'au moins un s'engage dans la première chambre (32), ou dans une deuxième position dans laquelle l'élément de blocage (40) au nombre d'au moins un s'engage dans la chambre de dérivation (50).

2. Unité d'entraînement selon la Revendication 1, ***caractérisée en ce que**,* lors du mouvement de la tige (8) vers la position prédéterminée, l'élément de blocage (40) et la douille axiale (54) sont entraînés dans le sens axial, l'élément de blocage (40) pouvant être amené au moins partiellement dans la chambre de dérivation (50) de la douille extérieure (26).

3. Unité d'entraînement selon la Revendication 1 ou 2, ***caractérisée en ce que*** la douille intérieure (54) est entourée partiellement par la douille extérieure (26) comprenant la chambre de dérivation (50) et/ou est mobile partiellement dans et hors de celle-ci, et/ou ***en ce que*** l'élément de blocage (40) s'engage au moins partiellement dans la première chambre (32) ou, pour libérer la tige (8) après un déplacement en particulier axial de la douille extérieure (26) au moyen de l'unité de déclenchement, au moins partiellement dans la chambre de dérivation (50) de la douille extérieure (26).

4. Unité d'entraînement selon l'une quelconque des Revendications 1 à 3, ***caractérisée en ce que*** la douille extérieure (26) est chargée au moyen d'un élément à ressort (48) et est mobile axialement au moyen de l'unité de déclenchement (12) de telle manière que le ou les élément(s) de blocage arrive(nt) dans la chambre de dérivation (50) et libère(nt) la tige (8) en vue d'un déplacement axial.

5. Unité d'entraînement selon l'une quelconque des Revendications 1 ou 4, ***caractérisée en ce qu'***à la tige (8) est associé un épaulement annulaire ou un bord d'extrémité (31), la première douille (30) étant de préférence appuyée axialement sur un épaulement annulaire (28) de la tige (8), et ***en ce que*** la partie de la tige (8) opposée à la première chambre (32) présente un diamètre (36) qui est inférieur au diamètre extérieur (34) de la première douille (30) ou de la tige (8) au niveau de la première chambre (32).

6. Unité d'entraînement selon l'une quelconque des Revendications 1 à 5, ***caractérisée en ce que*** la douille intérieure (54) est prévue pour le guidage axial et/ou l'immobilisation de l'élément de blocage (40) au nombre d'au moins un, et/ou ***en ce que*** la douille intérieure (54) est placée radialement entre la première douille (30) et la douille extérieure (26) et/ou est mobile dans le sens de l'axe longitudinal (6).

7. Unité d'entraînement selon l'une quelconque des Revendications 1 à 6, ***caractérisée en ce que*** la douille extérieure (26), en particulier sur sa surface extérieure, présente un évidement (52) dans lequel s'engage un tenon (24) de l'unité de déclenchement (12).

8. Unité d'entraînement selon l'une quelconque des Revendications 1 à 7, ***caractérisée en ce que*** l'unité de verrouillage est placée directement à la suite du dispositif de manoeuvre et est traversée par la tige de manoeuvre (8), le boîtier (10) de l'unité de verrouillage contenant à l'autre extrémité, pour le guidage et/ou l'étanchéité, une tête (42) ainsi qu'au moins un élément d'étanchéité (44).

9. Unité d'entraînement selon l'une quelconque des Revendications 1 à 8, ***caractérisée en ce qu'***un palier (20) d'un goujon (18) d'excentrique de l'unité de déclenchement (12) est placé dans le boîtier (10).
